**Europäisches Patentamt**

**European Patent Office**

**Office européen des brevets**

(19)

(11) Veröffentlichungsnummer: **0 154 667**
A1

(12) **EUROPÄISCHE PATENTANMELDUNG**

(21) Anmeldenummer: **84106733.3**

(22) Anmeldetag: **13.06.84**

(51) Int. Cl.⁴: **B 65 G 1/06**, B 66 F 9/07

(30) Priorität: **28.01.84 DE 3402996**

(43) Veröffentlichungstag der Anmeldung: **18.09.85**
**Patentblatt 85/38**

(84) Benannte Vertragsstaaten: **BE DE FR GB NL**

(71) Anmelder: **Fördertechnische Forschungsgesellschaft mbH, Mühlendamm 1, D-2000 Schenefeld (DE)**

(72) Erfinder: **Lässig, Harry, Swatten Weg 71, D-2000 Schenefeld (DE)**

(74) Vertreter: **Patentanwälte Dipl.-Ing. J. Richter Dipl.-Ing. F. Werdermann, Neuer Wall 10, D-2000 Hamburg 36 (DE)**

(54) **Anlage zum Ein- und Auslagern von Containern unter Verwendung eines Hochregallagers.**

(57) Das Container-Hochregallager (100) besteht aus zwei unter Ausbildung eines Verteilerschachtes (15) mit einer der Länge eines 40'-Containers entsprechenden Breite in einem Abstand voneinander angeordneten Regalteilen (11, 111) mit einer Anzahl von neben- und übereinander angeordneten Regalfächern (12, 112), stirnseitigen, senkrechten Aufzügen mit Container-Spreadern für die Ein- und Ausschleusung von Containern zu mindestens einem Regalbediengerät (20) in jeder Regaletage (E, E1–E10) mit einem in Verteilerschachtlängsrichtung zwischen den beiden Regalteilen (11, 111) waagerecht verfahrbaren Verteilerwagen (120) mit einem in die einzelnen Regalfächer ein- und ausfahrbaren Laufwagen (220), mit einem Spreader zur Aufnahme eines 40'-Containers oder von zwei 20'-Containern (C, C1), wobei mittels des Regalbediengerätes (20) die vom Aufzug angenommenen Container (C, C1) stirnseitig in die jeweiligen Regalfächer (12, 112) eingeschoben werden. Ein derartiges Hochregallager (100), welches baukastenförmig ausgebildet ist, ermöglicht die gleichzeitige Erweiterung in Anpassung an die jeweils zur Verfügung stehenden Aufstellflächen.

Anlage zum Ein- und Auslagern von Containern unter Verwendung eines Hochregallagers.

Die Erfindung betrifft eine Anlage zum Ein- und Auslagern von Containern unter Verwendung eines Hochregallagers mit in Etagen vorgesehenen Regalfächern.

Container benötigen für die Lager- und Vorratshaltung viel Raum, da in zahlreichen Fällen ein vielschichtiges Übereinanderstapeln der Container nicht möglich ist, so daß das Stapeln der Container sich über größere Flächen verteilen muß. Werden mehrere Container übereinander angeordnet gestapelt, so sind hierfür geeignete Fahrzeuge mit Spreadern erforderlich, deren Hubhöhe jedoch begrenzt ist.

So ist es bekannt, Behältnisse oder andere Gegenstände zwecks Stapelns zu Reihen zusammenzufassen und unter Anheben der bodenseitigen Öffnung einem Aufnahmeschacht zuzuführen, wobei gleichzeitig die jeweils unterste Reihe mit den darüberliegenden Reihen im Schacht, welche von im Bereich der Schachtöffnung vorgesehenen Halteorganen unterstützt ist, soweit angehoben wird, bis die Halteorgane die neue zugeführte unterste Reihe in der angehobenen Stellung unterfassen, und daß zum Entstapeln die Halteorgane von der untersten Reihe im Stapel gelöst werden, worauf diese um ihre Höhe zusammen mit den darüberliegenden Reihen abgesenkt und abgeleitet wird, während gleichzeitig die nächst untere Reihe von den Halteorganen unterfaßt wird.

Zum Stapeln und Entstapeln von Behältnissen oder anderen Gegenständen sind Vorrichtungen in den verschiedensten Ausführungsformen bekannt. Bei einer bekannten Stapel- und Entstapelvorrichtung ist ein waagerechter, mit Stützbeinen versehener Tragrahmen vorgesehen, der einen Führungsschacht zur Aufnahme einer Gegenstandsreihe mit einer
bodenseitigen Öffnung trägt, dessen Breite den Abmessungen
der Gegenstände entspricht. Im Bereich dieser Schachtöffnung
sind Halteorgane vorgesehen , die einander gegenüberliegend
in einem den Abmessungen der Gegenstände entsprechenden
Abstand nebeneinander angeordnet sind. Unterhalb dieser
Schachtöffnung ist ein die Gegenstände aufreihender
Förderer mit einem abgabeseitig in der Zulaufrichtung
angeordneten, die Länge der Reihe begrenzenden Anschlag
angeordnet, wobei der aufreihende Förderer als umlaufendes
Transportband ausgebildet ist. Dem Aufreihungsförderer
ist eine Hebebühne zugeordnet, durch welche die Gegenstandsreihen bis in den Bereich der Halteorgane anhebbar sind.
Der Aufreihungsförderer ist bei einer bekannten Ausführungsform auf der Hebebühne befestigt und wird mit dieser
zusammen angehoben.

Des weiteren ist eine Anlage zum Ein- und Auslagern
von Stückgütern gleicher Art und Größe, bestehend aus
einem Hochregallager mit in Etagen übereinander angeordneten
horizontalen Speicherbahnen vorgesehenen Schächten
für je eine Hub- und Absenkvorrichtung nach der DE-AS
24 32 557 bekannt, wobei jede derselben mit einer Einrichtung
zur Aufnahme von Stückgut bzw. stückguttragenden Transport-
und Lagerplatten und zum Überleiten derselben auf die
Speicherbahnen bzw. aus diesen heraus versehen ist,
und wobei beide Hub- und Absenkvorrichtungen synchron
auf- oder abwärtsbewegbar sind. Bei dieser Anlage weisen
die Etagen, von denen die unterste Etage der Aufnahme
von unbeladenen Transport- und Lagerplatten dient, eine
ihre gesamte Länge füllende Anzahl von aus rechteckförmigen
Zuschnitten bestehenden Transport- und Lagerplatten
mit einer dem Vielfachen ihrer Breite und der Breite
eines Stückgutes entsprechenden Länge auf, wobei auf
einer der beiden in den Schächten angeordneten Hub-
und Absenkvorrichtungen eine unbeladene Transport- und Lagerplatte angeordnet ist, während einer der beiden Hub- und Absenkvorrichtungen eine Einrichtung zum Be- und Entladen der Transport- und Lagerplatten zugeordnet ist. Mit einer derart ausgebildeten Anlage ist das Unterbringen einer Vielzahl von nebeneinander angeordneten Stückgütern in den einzelnen Etagen möglich, doch wird hierfür eine Vielzahl von Transport- und Lagerplatten benötigt, die zur Aufnahme der Stückgüter dienen. Eine derartige, mit Transport- und Lagerplatten arbeitende Anlage ist nicht für Container geeignet, sondern ausschließlich für Palettenladungen vorgesehen.

Auch sind Durchlaufregale bekannt. Hier erfolgt die Beschickung und die Entnahme an der Stirnseite einer Regalgruppe durch zwei mit einem Elektrofahrwerk verfahrbare Hubgeräte, von denen eines der Beschickung und das andere der Entnahme dient. Beide Geräte sind durch eine Rücklaufbahn verbunden, die bei Bedarf einen ständigen Kreislauf ermöglicht, wodurch erreicht wird, daß die Geräte in jedem Feld des Regals jedes Fach beschicken bzw. entladen können. Die Transport- und Speicherbahnen bestehen dabei aus Rollen- und Röllchenbahnen, die so ausgebildet sind, daß das Fördergut eine Unterstützung auf der ganzen Fläche verlangt. Dieses Durchlaufregallager weist einen hohen konstruktiven Aufwand auf. Jeder in dem Lager ausgebildete Kanal ist nämlich mit einer Rollenbahn zur Aufnahme von übereinander angeordneten Kisten oder Paletten versehen. Auf diesen Rollenbahnen werden die einzelnen übereinander gestapelten Kisten bewegt und für die Entnahme der Kisten ist es erforderlich, daß der gesamte Stapel in dem Bereich der Entnahmestelle bewegt wird. Außerdem ist ein derart ausgebildetes Durchlaufregal nicht für große Höhen auslegbar, um eben eine Vielzahl von Containern übereinander stapeln zu können mit der Möglichkeit, die Container einzeln aus dem Stapel herausnehmen zu können.

Die Erfindung löst die Aufgabe, eine Anlage zum Ein-

und Auslagern von Containern zu schaffen, mit der eine optimale Ausnutzung eines vorhandenen Aufstellungsraumes möglich ist, in der sowohl 40'-Container als auch 20'-Container untergebracht werden können, mit der der Ein- und Ausschleusevorgang mit großer Schnelligkeit durchführbar ist und bei der ein Zugriff an jeden einzelnen Containerlagerplatz jederzeit möglich ist, wobei ein Umstapeln der Container entfällt.

Zur Lösung dieser Aufgabe wird eine Anlage zum Ein- und Auslagern von Containern unter Verwendung eines Hochregallagers mit in Etagen vorgesehenen Regalfächern vorgeschlagen, die erfindungsgemäß in der Weise ausgebildet ist, daß

a) das Hochregallager aus zwei unter Ausbildung eines Verteilerschachtes mit einer mindestens der Länge von einem 40'-Container oder zwei 20'-Containern entsprechenden Breite in einem Abstand voneinander angeordneten Regalteilen mit einer Anzahl von in Etagen neben- und übereinander angeordneten Regalfächern mit im Bereich des Verteilerschachtes liegenden stirnseitigen Öffnungen und mit einer mindestens der Länge eines 40'-Containers oder von zwei 20'-Containern entsprechenden Länge besteht, wobei die einzelnen Etagen eines jeden Regalteiles den Etagen des jeweils anderen Regalteils gegenüberliegend sind,

b) jede Regalteiletage an der dem Verteilerschacht zugekehrten Seite eine waagerechte, sich über die ganze Länge des Verteilerschachtes erstreckende Laufschiene aufweist, wobei je zwei sich gegenüberliegende Laufschienen die Führungsbahn für mindestens ein waagerecht verfahrbares Regalbediengerät bilden,

c) das Regalbediengerät aus einem Verteilerwagen besteht, der als Stahlrahmen-Brücke ausgebildet ist, die zwischen den beiden Regalteilen auf den Laufschienen einer jeden Etage in Verteilerschachtlängsrichtung verfahrbar ist, und der einen unterhalb des Verteilerwagens hängend angeordneten, quer zur Bewegungsbahn des Verteilerwagens in die Regalfächer einfahrbaren Laufwagen trägt, der mit einem Spreader für 40'-Container oder mit zwei Spreadern für 20'-Container und mit einem Hubwerk zum Absenken des Container-Spreaders bzw. mit zwei Hubwerken zum unabhängigen Heben und Absenken der beiden Container-Spreader voneinander versehen ist,

d) jedes Regalfach obenseitig zwei waagerechte Laufschienen für den Laufwagen und bodenseitig Abstützungen mit Containerverriegelungseinrichtungen aufweist,

e) an einem Ende des Verteilerschachtes oder an jedem Ende des Verteilerschachtes ein Aufzug aus einer Rahmenkonstruktion mit einem heb- und senkbaren, innenhängenden Spreader zur Aufnahme eines 40'-Containers bzw. von zwei 20'-Containern angeordnet ist, der in waagerechter Richtung auf die Laufschienen einer jeden Etage verfahrbar ist, die zum Absetzen der einzelnen Container benachbart zum Aufzug Container-Trageeinrichtungen aufweisen,

f) alle Antriebseinrichtungen zur Steuerung der Fahrbewegungen des Aufzuges, seines Spreaders und des Regalbediengerätes mit dem Verteilerwagen und dem Laufwagen sowie zum Heben und Senken der Spreader in einem Programmsteuerwerk zusammengefaßt sind, in das auch die einzelnen Regalfächer eingespeichert sind.

Des weiteren ist das Hochregallager um jeweils eine senkrechte Regalfachreihe erweiterbar ausgebildet.

Mit einer derart ausgebildeten Anlage wird ein Container-Terminal geschaffen, mit dem bei hohen Arbeitsgeschwindigkeiten ein Ein- und Auslagern der Container möglich ist. Aufgrund der konstruktiven Ausgestaltung ist diese Anlage auch dort aufstellbar, wo bei Kaianlagen wenig Raum zur Verfügung steht und somit die Möglichkeit gegeben ist, eine Vielzahl von Containern übereinander stapeln zu können mit der weiteren Möglichkeit, ohne daß die Container umgestapelt werden müssen, die einzelnen, jeweils angeforderten Container dem Hochregallager entnehmen zu können bzw. in freie Regalfächer Container absetzen zu können, wobei es unerheblich ist, ob es sich um 40'-Container oder um 20'-Container handelt. Dadurch, daß in die einzelnen Regalfächer die Container eingefahren und abgesetzt werden, ist eine Vielzahl von Containern schnell unterbringbar. Außerdem ermöglicht die Anlagenausgestaltung die jederzeitige Erweiterung der Anlage, was aufgrund der baukastenförmigen Aufgliederung der Regalteile möglich ist, so daß sich verschiedene Kombinationen des Container-Hochregallagers anbieten, und zwar jeweils in Anpassung an die zur Verfügung stehenden Grundflächen. Die Schnelligkeit des Ein- und Ausschleusevorganges für die einzelnen Container kann durch eine Vielzahl von Verteilerwagen erheblich gesteigert werden. Besonders vorteilhaft ist dabei, daß das Regalbediengerät derart ausgebildet ist, daß die in den Verteilerwagen integrierten Laufwagen in die einzelnen Regalfächer einfahren können, um in diesen Container absetzen zu können oder um aus diesen Container entnehmen zu können, ohne daß dabei die Zuliefergeschwindigkeit der Container zum Hochregallager beeinträchtigt wird, da unabhängig hiervon die Hubwerke an den Stirnseiten des Verteilerschachtes Container zuführen und ableiten können. Durch das Absetzen der Container durch die Hubwerke in den jeweils die Container aufnehmenden Etagen stehen die Hubwerke für den weiteren Transport von Containern in anderen Etagen oder zur Entnahme von Containern aus den einzelnen Regalfächern zur Verfügung, und zwar unabhängig von der Arbeitsweise der in den einzelnen Etagen angeordneten Regalbediengeräte .

Im folgenden wird der Gegenstand der Erfindung in den Zeichnungen erläutert. Es zeigt

Fig. 1 in einer Ansicht von oben eine Anlage zum Ein- und Auslagern von Containern mit zu beiden Seiten des Verteilerschachtes angeordneten Hubwerken,

Fig. 2 in einer schaubildlichen Ansicht einen Teil der Anlage mit einem Hubwerk,

Fig. 3 eine Vorderansicht der Anlage,

Fig. 4 eine Vorderansicht der Anlage mit entferntem Hubwerk, jedoch mit in das Regal eingefahrenem Laufwagen und leerem Verteilerwagen und mit einem Verteilerwagen des Regalbediengerätes mit darunterhängendem Laufwagen und Spreader mit zwei aufgenommenen 20'-Containern,

Fig. 5 eine Vorderansicht des Verteilerwagens des Regalbediengerätes mit darunterhängendem Laufwagen und Spreader und mit zwei aufgenommenen 20'-Containern,

Fig. 6 in einer Seitenansicht das Regalbediengerät gemäß Fig. 5,

Fig. 7 eine Seitenansicht eines in ein Regalfach der Anlage eingefahrenen Laufwagens mit Spreader und mit zwei von diesen gehaltenen 20'-Containern in der Stellung, in der die Container auf die Regalauflagerstützen abgesetzt sind, und

Fig. 8 in einer Seitenansicht den in ein Regalfach eingefahrenen Laufwagen entsprechend Fig.7.

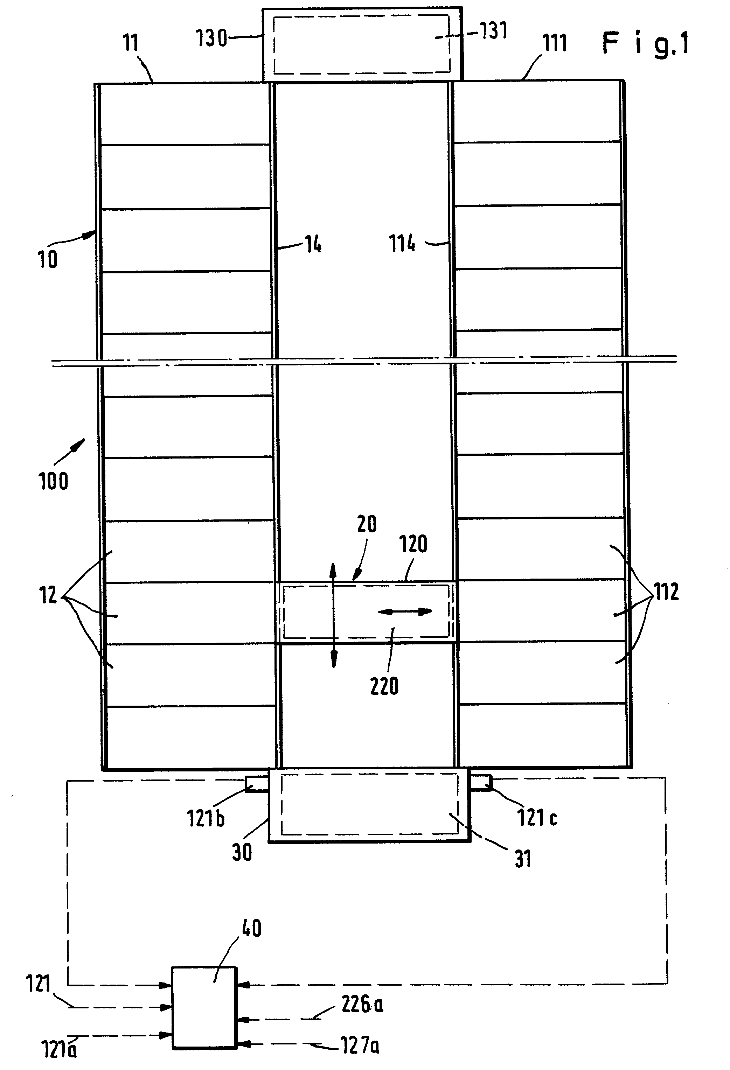

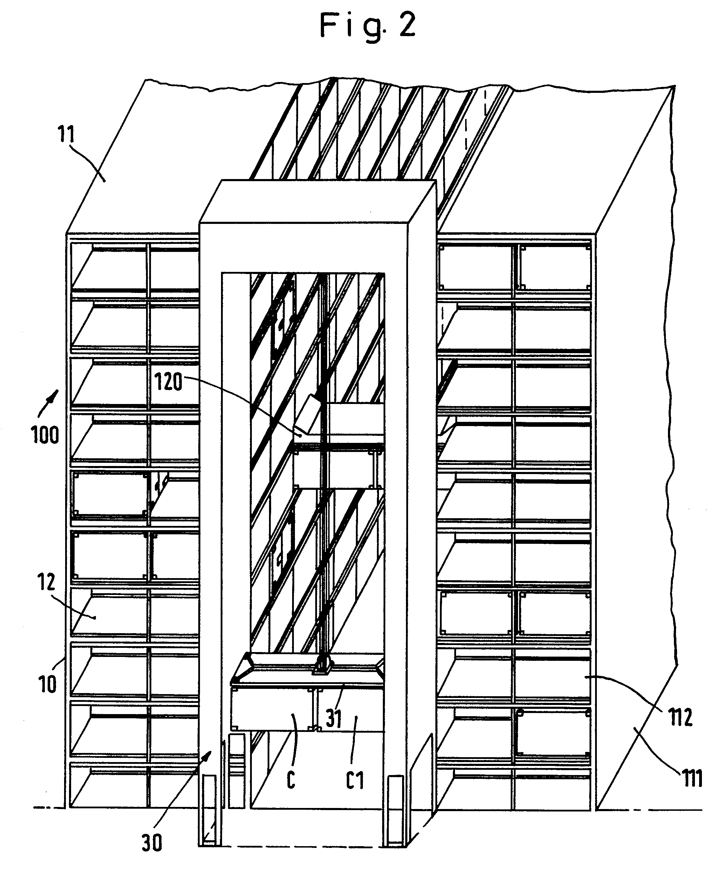

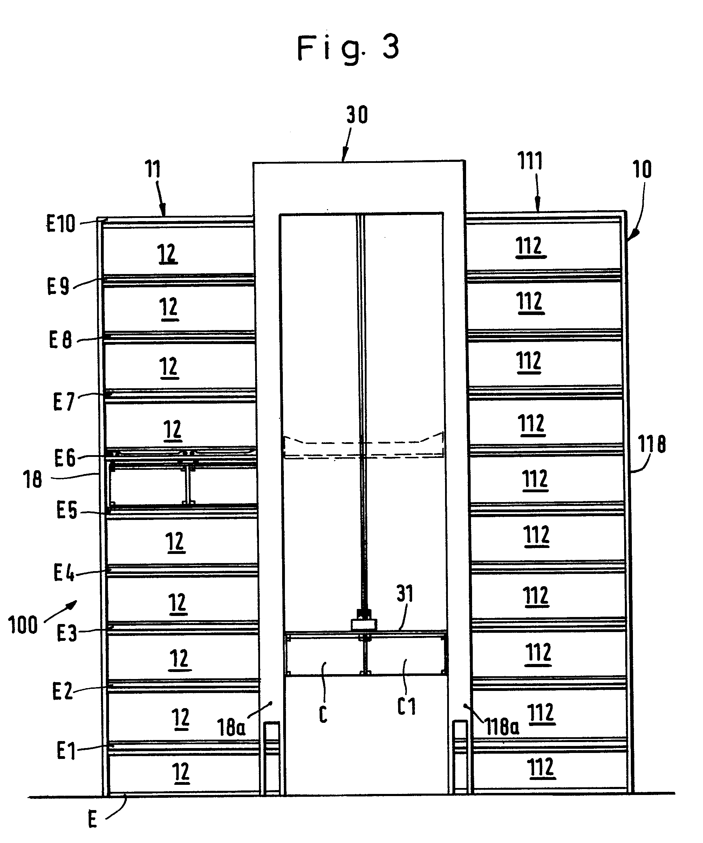

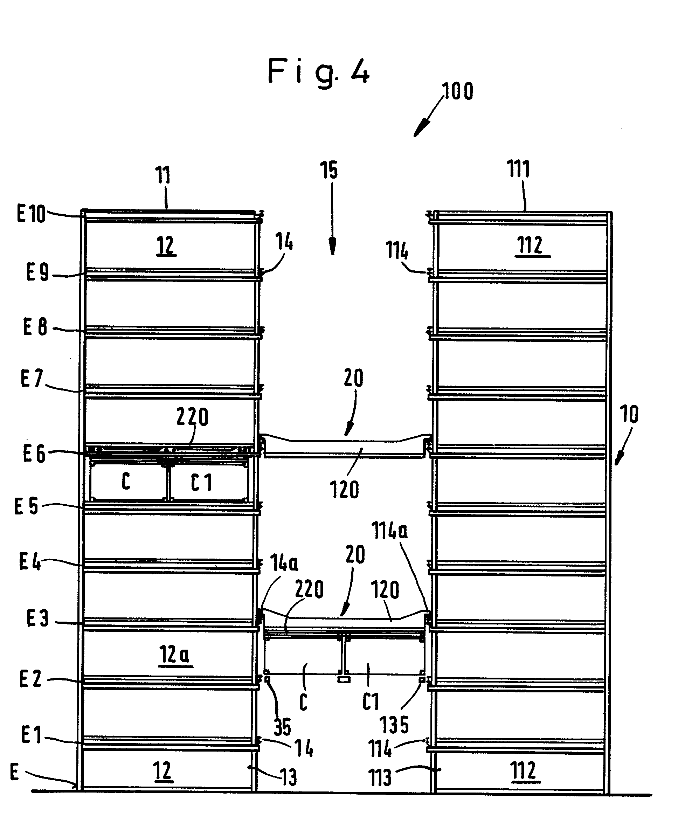

Die in Fig. 1 und 2 dargestellte und mit 100 bezeichnete Anlage zum Ein- und Auslagern von Containern umfaßt ein Hochregallager 10 aus zwei Regalteilen 11,111, die unter Ausbildung eines Verteilerschachtes 15 mit einer der Länge eines 40'-Containers entsprechenden Breite in einem Abstand voneinander angeordnet sind. Jedes Regalteil 11,111 besteht aus senkrechten Regalpfosten 18,118,18a, 118a, die über waagerechte Querträger miteinander verbunden sind, so daß in den einzelnen Regalteilen 11,111 einzelne Etagen E,E1,E2,E3,E4,E5,E6,E7,E8,E9,E10 ausgebildet werden. Die Etagen der beiden Regalteile 11,111 sind nicht zueinander versetzt, sondern die Etagen der beiden Regalteile liegen in denselben Ebenen (Fig.3). Die senkrechten Regalpfosten sind in Abständen voneinander angeordnet, so daß in den beiden Regalteilen 11,111 eine Vielzahl von neben- und übereinanderliegend angeordneten Regalfächern ausgebildet wird , die mit 12,112 bezeichnet sind. Die Abmessungen der einzelnen Regalfächer 12,112, die mit ihren Stirnseiten dem Verteilerschacht 15 zugekehrt sind, entsprechen denen eines 40'-Containers oder denen von zwei hintereinanderliegenden 20'-Containern, doch unter Freilassung eines oberen Raumes für das Ein- und Ausfahren des Laufwagens 220 eines Regalbediengerätes 20, worauf nachstehend noch näher eingegangen wird. Die stirnseitigen Öffnungen der einzelnen Regalfächer 12,112 sind mit 13,113 bezeichnet (Fig.4).

Jede Regalteiletage E,E1 bis E10 weist an der dem Verteilerschacht 15 zugekehrten Seite eine waagerechte, sich über die ganze Länge des Verteilerschachtes 15 erstreckende Laufschiene 14,114 auf. Jeweils zwei sich gegenüberliegende Laufschienen 14,114 bilden die Führungsbahn für das Regalbediengerät 20.

Dieses Regalbediengerät 20 besteht aus einem Verteilerwagen 120, der aus einer Stahlrahmenkonstruktion in Brückenform besteht, welche zwischen den Regalteilen 11,111 auf den Laufschienen 14,114 läuft. Jeder Hochregallageretage ist mindestens ein Regalbediengerät zugeordnet. Je nach den Zu- und Abtransportmöglichkeiten können auch zwei Regalbediengeräte für jede Etage vorgesehen sein (Fig.4).

Unter dem Verteilerwagen 120 hängt ein Laufwagen 220,

- 9 - 0154667

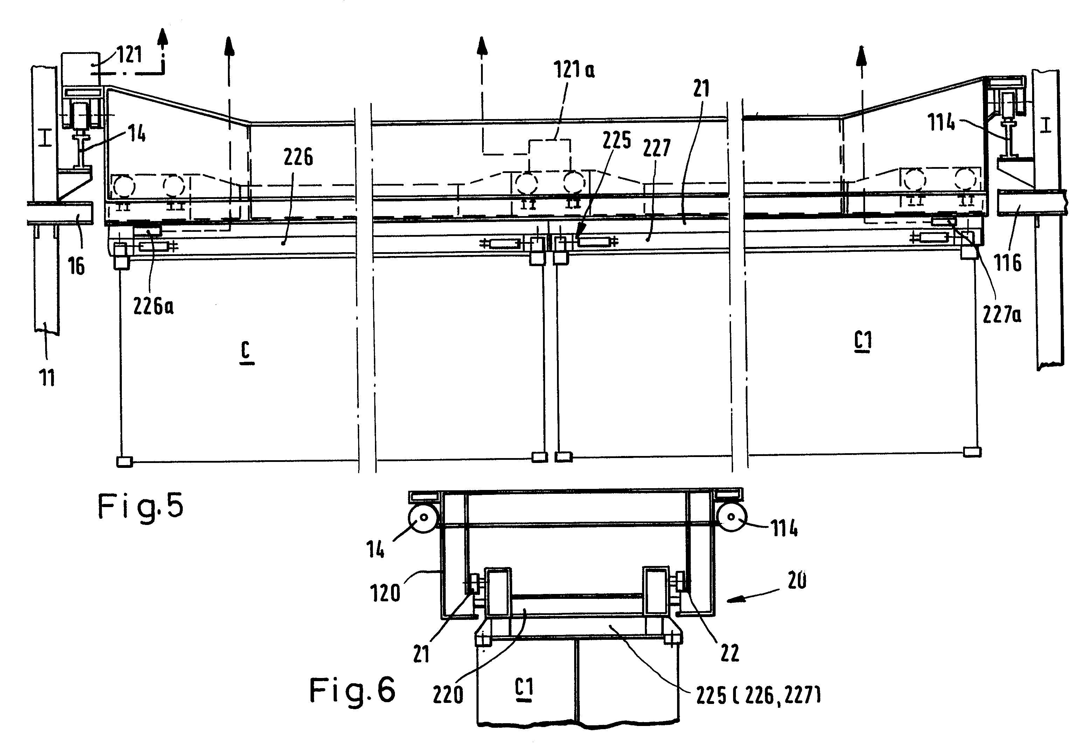

der in das jeweilig angewählte Regalfach einlaufen kann. Hierzu weist der Verteilerwagen 120 in seinem unteren Bereich zu beiden Seiten der Brückenkonstruktion Laufschienen 21,22 auf (Fig. 5 und 6). Ebenfalls Laufschienen 16,116 sind in den oberen Bereichen der Regalfächer 12,112 vorgesehen, die in der Regalfacheinfahr- oder -ausfahrstellung des Laufwagens 220 mit den Laufschienen 21,22 des Verteilerwagens 120 korrespondieren, damit der Laufwagen 220 von dem Verteilerwagen 120 in das Regalfach eingefahren werden kann. Auf diese Weise kann der Laufwagen 220 sowohl in das eine als auch in das andere Regalteil einlaufen. Das Verfahren des Laufwagens 220 erfolgt mittels einer elektromotorischen Antriebseinrichtung 121a. Die Versorgung des Antriebsmotors erfolgt vom Verteilerwagen 120 über in der Zeichnung nicht dargestellte Leitungstrommeln (Fig.5). Für das Verfahren des Verteilerwagens 120 in Verteilerschachtlängsrichtung ist ebenfalls eine elektromotorische Antriebseinrichtung 121 vorgesehen.

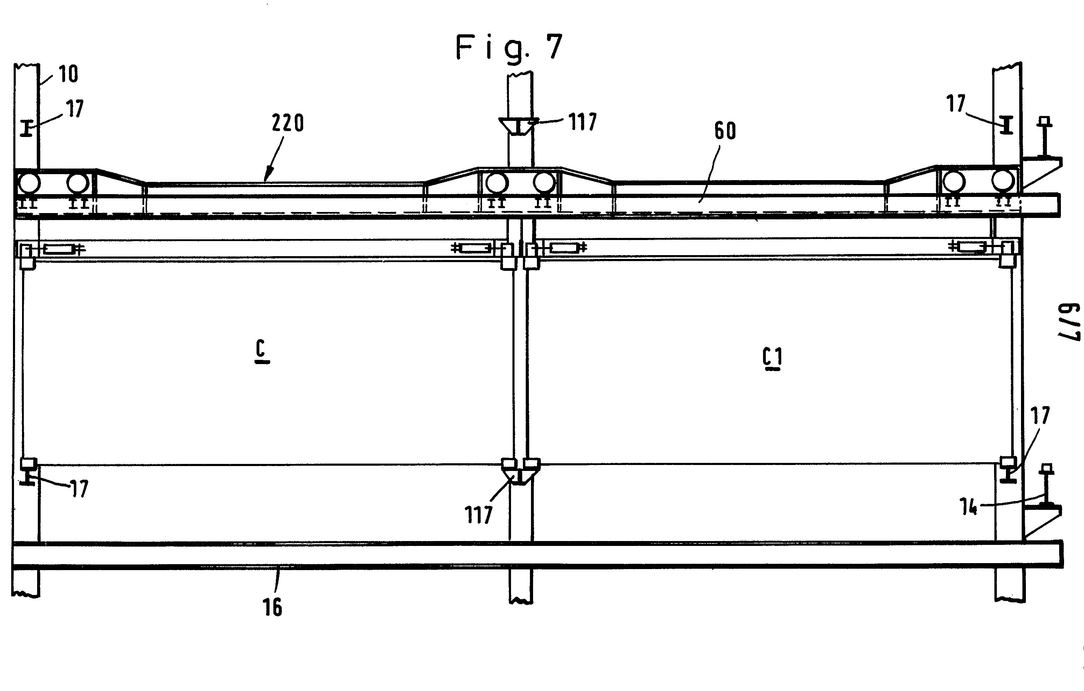

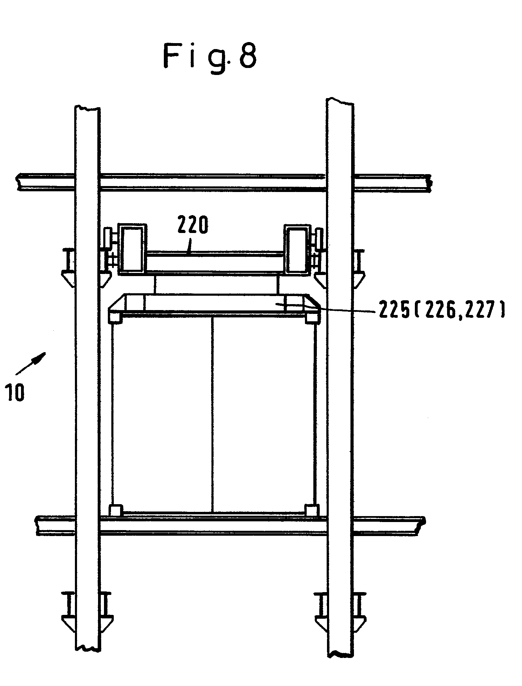

Unter dem Laufwagen 220 hängen die beiden Hälften eines Spreaders für 40'-Container, der sowohl einen 40'-Container als auch zwei 20'-Container oder jeweils nur einen 20'- Container aufnehmen kann. Der Spreader ist mit 225 bezeichnet; er kann auch nur zur Aufnahme eines 40'-Containers ausgebildet sein. Die beiden Hälften des Spreaders 225, also die beiden Spreader zur Aufnahme von 20'-Containern, sind mit 226,227 und die beiden 20'-Container mit C,C1 bezeichnet (Fig.5 und 6). Die Spreader 225,226,227 sind in an sich bekannter Weise ausgebildet und für ihre Betätigung mit den entsprechenden Antriebseinrichtungen 226a,227a versehen. Mittels dieser Antriebseinrichtungen 226a,227a bzw. Hubwerken sind die Spreader 226,227 heb- und senkbar, und zwar auch unabhängig voneinander. Dadurch ist es möglich, den Spreader 225 und auch jede Spreaderhälfte 226,227 zu heben und zu senken. Wird ein Container vom Bereitstellungsplatz eines an einer der beiden Stirnseiten des Verteilerschachtes 15 vorgesehenen Aufzuges 30 bzw. 130, worauf nachstehend noch näher eingegangen wird, aufgenommen, so wird der Spreader abgelassen, die Verriegelungszapfen des Spreaders tauchen in die Containerebene ein, werden dort verriegelt und die gesamte Einheit aus Spreader und Container wird angehoben. Dann verfährt der Verteilerwagen 120 in Längsrichtung des Hochregals zu dem jeweilig bestimmten Regalplatz. Der Verteilerwagen 120 positioniert sich automatisch, der Laufwagen 220 fährt durch eine vorgesehene, spezielle Stützrollenanordnung für den Positioniertoleranzausgleich in das Regalfach. Dort wird der Spreader wieder gesenkt, der Container im Regal auf Abstützungen 17,117 abgestellt, von denen die Abstützung 117 derart ausgebildet ist, daß diese auch zwei 20'-Container aufnehmen kann, hierauf dann die Verriegelungszapfen entriegelt und der Spreader angehoben. Eine Verriegelung der Container auf ihren Abstützungen 17,117 ist ebenfalls möglich. Derartige Abstützungen 17,117 sind quasi am Boden eines jeden Regalfaches vorgesehen. Der Laufwagen 220 fährt dann wieder zurück in den Verteilerwagen 120. Der Einlagerungsvorgang ist abgeschlossen (Fig.4,7 und 8).

An einer der beiden Stirnseiten oder an beiden Stirnseiten des Verteilerschachtes 15 ist ein senkrechter Aufzug 30 angeordnet. Bei dem in Fig. 1 gezeigten Ausführungsbeispiel sind zwei Aufzüge 30,130 vorgesehen. Jeder Aufzug besteht aus einer Rahmenkonstruktion mit einem innenhängenden Spreader, der bei 31,131 angedeutet ist. Dieser Spreader kann einen 40'-Container bzw. zwei 20'-Container gleichzeitig aufnehmen und vermittels des Aufzuges den Container auf die entsprechende Regaletage bzw. -ebene heben. Dieser Spreader ist mittels eines in der Zeichnung nicht dargestellten Wagens auf den Laufschienen 14,114 fahrbar, in deren Bereich Trageinrichtungen vorgesehen sind, damit vom Spreader des Aufzuges Container abgesetzt werden können, um den Spreader in den Aufzug wieder einfahren zu können und um den Aufzug zum Transport weiterer Container zur Verfügung zu haben. Der Aufzug 30 - ebenso auch der Aufzug 130 - arbeitet dabei wie folgt: Sollen die beiden 20'-Container C,C1 in das Regalfach 12a eingefahren werden, dann verfährt der Aufzug 30 mit seinem Spreader in den Bereich der Laufschienen 14a,114a, damit der den Spreader tragende Wagen des Aufzuges 30 auf die Laufschienen 14a,114a fahren kann, um die Container auf Trageinrichtungen absetzen zu können, die bei 35,135 in Fig. 4 angedeutet sind und die in waagerechter Richtung in die Regalfächer einfahrbar ausgebildet sein können. Die Trageinrichtungen 35,135 sind dabei so ausgestaltet, daß von diesen auch zwei 20'-Container aufgenommen werden können. Sind die Container C,C1 auf den Trageinrichtungen abgesetzt, dann fährt der Wagen mit dem Spreader wieder in den Aufzug 30, um einen anderen Container in eine andere Etage zu befördern oder aus der Etage herauszunehmen, nachdem der Container von dem Regalbediengerät 20 in den Aufnahmebereich des Aufzugsspreaders 31 gebracht worden ist. Die auf den Trageinrichtungen 35,135 abgesetzten Container C,C1 werden dann von dem Regalbediengerät 20 aufgenommen und in das vorgesehene Regalfach gebracht (Fig.4).

Die Anlieferung an den Aufzug 30 bzw. 130 erfolgt sowohl durch Lastkraftwagen, durch Güterwagen als auch durch andere Förderfahrzeuge. Der Spreader 31 bzw. 131 des Aufzuges 30 bzw. 130 verfügt über genormte Verriegelungs- zapfen, welche in die Containerecken eingreifen. Der Container wird von dem Aufzug auf der jeweiligen Etage bereitgestellt und der Aufzug ist für neue Containerhübe bereit. Die Antriebseinrichtungen für die Aufzüge 30,130 sind in Fig.1 bei 121b,121c angedeutet.

Das Container-Hochregallager 100 besteht somit aus den beiden Regalteilen 11,111, den stirnseitigen Aufzügen 30,130 für die Ein- bzw. Ausschleusung von Containern und dem Regalbediengerät 20 für den Transport der Container zu den einzelnen Regalfächern 12,112. Der Verteilerwagen 120 läuft in der Mitte der beiden Regalteile 11,111 und kann die Container vom Aufzug 30 bzw. 130 annehmen bzw. an den Aufzug abgeben. Die Container werden stirnseitig in die Regalfächer 12,112 eingeschoben, wobei zwei 20'-Container genauso wie ein 40'-Container pro Fach unterzubringen sind. Gesteuert wird die gesamte Anlage durch einen Mikrorechner, welcher zum einen die Bewegungen der Regalbediengeräte und der Aufzüge überwacht, zum anderen aber auch die Regalkomponenten im einzelnen. Alle Antriebs- und Steuereinrichtungen sind in einem Programmschaltwerk 40(Fig.1) zusammengeführt, das mit einem Speicherwerk versehen ist, in das alle Daten eingegeben werden, die das Verfahren der Aufzüge 30,130 und der Regalbediengeräte 20 betreffen, wobei selbsttätige Leermeldesignale an das Speicherwerk ebenso abgegeben werden wie "Regal besetzt"-Signale, so daß das Ein- und Ausschleusen der Container vollautomatisch ablaufen kann.

Die Konstruktionselemente der Regalanlage bestehen aus Regalpfosten, Containerauflageträgern,Diagonalverbänden, Laufstegen, Steigleitern und aus einer Dach- und Außenwandverkleidung als Wetterschutz. Die Stahlkonstruktion ermöglicht es, daß bis zu zehn Regalfächer übereinander aufgebaut werden können. Jedes Regalfach hat die Möglichkeit, einen 40'-Container oder zwei 20'-Container einzuspeichern, welche durch den Spreader des Verteilerwagens auch gleichzeitig in das Regalfach gestellt werden können.

Das Hochregallager ist baukastenförmig ausgelegt, so daß eine Erweiterung um jeweils eine senkrechte Regalfachreihe möglich ist. Durch diese baukastenförmige Aufgliederung des Regales ist es möglich, viele verschiedene Kombinationen des Container-Hochregallagers auf vorhandene Grundflächen zu stellen, um so den vorhandenen Platz optimal ausnutzen zu können. So sind Container-Hochregallager von 20 über 200 bis zu 2800 Container (1 TEU = 20'-Container) möglich. Die Schnel-

0154667

ligkeit des Ein- und Ausschleusevorganges kann durch eine Mehrzahl von Verteilerwagen erheblich gesteigert werden. Auch ist ein Zugriff an jeden einzelnen Containerlagerplatz jederzeit möglich. Ein Umstapeln von Containern entfällt. Hohe Arbeitsleistungen werden erzielt, wenn in jeder Etage mindestens eine der Anzahl der vorgesehenen Aufzüge entsprechende Anzahl von Regalbediengeräten 20 vorgesehen ist. In jeder Etage können jedoch auch mehr als zwei Regalbediengeräte 20 vorgesehen sein.

Patentansprüche

1. Anlage zum Ein- und Auslagern von Containern unter Verwendung eines Hochregallagers mit in Etagen vorgesehenen Regalfächern, dadurch gekennzeichnet, daß

a) das Hochregallager (10) aus zwei unter Ausbildung eines Verteilerschachtes (15) mit einer mindestens der Länge von einem 40'-Container oder zwei 20'-Containern entsprechenden Breite in einem Abstand voneinander angeordneten Regalteilen (11,111) mit einer Anzahl von in Etagen neben- und übereinander angeordneten Regalfächern (12,112) mit im Bereich des Verteilerschachtes (15) liegenden stirnseitigen Öffnungen (13,113) und mit einer mindestens der Länge eines 40'-Containers oder von zwei 20'-Containern entsprechenden Länge besteht, wobei die einzelnen Etagen eines jeden Regalteiles (11;111) den Etagen des jeweils anderen Regalteils gegenüberliegend sind,

b) jede Regalteiletage an der dem Verteilerschacht (15) zugekehrten Seite eine waagerechte, sich über die ganze Länge des Verteilerschachtes erstreckende Laufschiene (14;114) aufweist, wobei je zwei sich gegenüberliegende Laufschienen (14,114) die Führungsbahn für mindestens ein waagerecht verfahrbares Regalbediengerät (20) bilden,

c) das Regalbediengerät aus einem Verteilerwagen (120) besteht, der als Stahlrahmen-Brücke ausgebildet ist, die zwischen den beiden Regalteilen (11,111) auf den Laufschienen (14,114) einer jeden Etage in Verteilerschachtlängsrichtung verfahrbar ist, und der einen unterhalb des Verteilerwagens (120) hängend angeordneten, quer zur Bewegungsbahn des Verteilerwagens in die Regalfächer (12,112) einfahrbaren Laufwagen (220) trägt, der mit einem Spreader (225) für 40'-Container oder mit zwei Spreadern (221,222) für 20'-Container und mit einem Hubwerk zum Absenken des Container-Spreaders (225) bzw. mit zwei Hubwerken (226,227) zum unabhängigen Heben und Absenken der beiden Container-Spreader (221, 222) voneinander versehen ist,

d) jedes Regalfach (12,112) obenseitig zwei waagerechte Laufschienen (16,16a;116) für den Laufwagen (220) und bodenseitig Abstützungen (17,117) mit Containerverriegelungseinrichtungen aufweist,

e) an einem Ende des Verteilerschachtes (15) oder an jedem Ende des Verteilerschachtes (15) ein Aufzug (30,130) aus einer Rahmenkonstruktion mit einem heb- und senkbaren, innenhängenden Spreader (31,131) zur Aufnahme eines 40'-Containers bzw. von zwei 20'-Containern angeordnet ist, der in waagerechter Richtung auf die Laufschienen (14,114) einer jeden Etage verfahrbar ist, die zum Absetzen der einzelnen Container benachbart zum Aufzug Container-Trageinrichtungen aufweisen,

f) alle Antriebseinrichtungen (121,121a,121b,121c,226a,227a) zur Steuerung der Fahrbewegungen des Aufzuges (30,130), seines Spreaders (31,131) und des Regalbediengerätes (20) mit dem Verteilerwagen (120) und dem Laufwagen (220) sowie zum Heben und Senken der Spreader (225;221, 222) in einem Programmsteuerwerk (40) zusammengefaßt sind, in das auch die einzelnen Regalfächer eingespeichert sind.

2. Anlage nach Anspruch 1, dadurch gekennzeichnet, daß das Hochregallager (10) um jeweils eine senkrechte Regalfachreihe erweiterbar ausgebildet ist.

0154667

Fig.1

# Fig. 2

0154667

## Fig. 3

# Fig. 4

Fig.5

Fig.6

0154667

Fig. 7

# Fig. 8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 84106733.3 |
| A | US - A - 3 581 915 (SANFORD) <br> * Gesamt * <br> -- | 1,2 | B 65 G 1/06 <br> B 66 F 9/07 |
| A | US - A - 3 836 020 (LASSIG) <br> * Fig. 1 * <br> -- | 1 | |
| A | DE - B2 - 2 113 202 (HOFFMANN) <br> * Gesamt * <br> ---- | 1-3 | |
| | | | **RECHERCHIERTE SACHGEBIETE (Int. Cl.4)** |
| | | | B 65 G <br> B 66 F |
| | Der vorliegende Recherchenbericht wurde für alle Patentansprüche erstellt. | | |

| Recherchenort | Abschlußdatum der Recherche | Prüfer |
|---|---|---|
| WIEN | 06-05-1985 | PISSENBERGER |